# EUROPEAN PATENT SPECIFICATION

(11) **EP 3 096 183 B1**
(45) Date of publication and mention of the grant of the patent: **27.04.2022**
(21) Application number: 15168216.8
(22) Date of filing: 19.05.2015
(51) Int. Cl.: G02F 1/39, G02F 1/37, H01S 5/00, H01S 5/40

(54) **QUASI-INCOHERENT BROADBAND PUMPED, TUNABLE, NARROW LINEWIDTH LIGHT SOURCE**
QUASI-INKOHÄRENTE BREITBANDGEPUMPTE, ABSTIMMBARE LICHTQUELLE MIT SCHMALER LINIENBREITE
SOURCE DE LUMIÈRE À LARGEUR DE RAIES ÉTROITE, SYNTONISABLE, À POMPAGE À LARGE BANDE ET QUASI INCOHÉRENTE

(43) Date of publication of application: 23.11.2016
(73) Proprietor: Qioptiq Photonics GmbH & Co. KG, 37081 Göttingen (DE)
(72) Inventor: Mueller, Frank, 81379 Muenchen (DE); Haerter, Arne, 81677 Munchen (DE)
(74) Representative: Hancox, Jonathan Christopher

(56) References cited:
- EP-A1- 1 006 967
- EP-B1- 1 006 967
- US-A- 5 296 960
- US-A1- 2012 195 333
- K-J BOLLER ET AL: "Diode-pumped optical parametric oscillators", QUANTUM AND SEMICLASSICAL OPTICS: JOURNAL OF THE EUROPEAN OPTICALSOCIETY PART B, INSTITUTE OF PHYSICS, BRISTOL, GB, vol. 9, no. 2, 1 April 1997 (1997-04-01), pages 173-189, XP020079543, ISSN: 1355-5111, DOI: 10.1088/1355-5111/9/2/006
- KAVITA DEVI ET AL: "Tunable, continuous-wave, ultraviolet source based on intracavity sum-frequency-generation in an optical parametric oscillator using BiB_3O_6", OPTICS EXPRESS, vol. 21, no. 21, 21 October 2013 (2013-10-21), page 24829, XP055228504, ISSN: 2161-2072, DOI: 10.1364/OE.21.024829
- DAS R ET AL: "Broadband, high-power, continuous-wave, mid-infrared source using extended phase-matching bandwidth in MgO:PPLN", OPTICS LETTERS, OPTICAL SOCIETY OF AMERICA, US, vol. 34, no. 24, 15 December 2009 (2009-12-15), pages 3836-3838, XP001550647, ISSN: 0146-9592
- MOORE G T ET AL: "Using multiple mutually incoherent fiber lasers to pump a coherent signal beam in an optical parametric oscillator", 1999 IEEE LEOS ANNUAL MEETING CONFERENCE PROCEEDINGS : LEOS '99 12TH ANNUAL MEETING, IEEE LASERS AND ELECTRO-OPTICS SOCIETY 1999 ANNUAL MEETING, 8 - 11 NOVEMBER, RENAISSANCE PARC FIFTY-FIVE HOTEL, SAN FRANCISCO, CA, IEEE SERVICE CENTER, PISCATAWAY, N, vol. 2, 8 November 1999 (1999-11-08), pages 584-585, XP010361091, DOI: 10.1109/LEOS.1999.811862 ISBN: 978-0-7803-5634-4

## Description

### FIELD OF THE INVENTION

The present invention relates to light sources, and more particularly, is related to devices utilizing resonators with imbedded nonlinear optics.

### BACKGROUND OF THE INVENTION

An optical parametric oscillator (OPO) is a light source emitting radiation with properties comparable to that of a laser. OPOs are nonlinear devices that split short wavelength pump photons into two longer wavelength photons, namely signal and idler photons. The wavelengths of the signal and idler photons are not independent from each other, but may be tuned in wavelength.

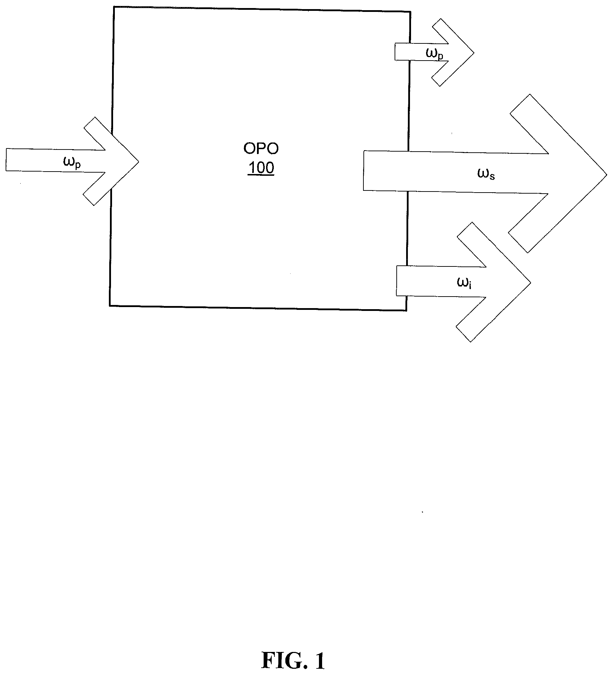

As shown by FIG. 1, an OPO converts an input laser wave (the "pump") with frequency ωₚ into two output waves of lower frequency (ωₛ, ωᵢ) via second-order nonlinear optical interaction. The sum of the frequencies of the output waves is equal to the input wave frequency: ωₛ+ ωᵢ = ωₚ. For historic reasons, the output wave with the higher frequency ωₛ is called the signal, and the output wave with the lower frequency ωᵢ is called the idler. Because the OPO does not convert all the input energy into the signal and idler, a residual pump wave is also output.

OPOs need an optical resonator, but in contrast to lasers, OPOs are based on direct frequency conversion in a nonlinear crystal rather than from stimulated emission. OPOs exhibit a power threshold for an input light source (pump), below which there is negligible output power in the signal and idler bands.

OPOs include an optical resonator (cavity) and a nonlinear optical crystal. The optical cavity is an arrangement of mirrors that forms a resonator for light waves. Light confined in the cavity is reflected multiple times resulting in a multi-pass through the nonlinear crystal. The optical cavity serves to resonate at least one of the signal and idler waves. In the nonlinear optical crystal, the pump, signal and idler beams overlap.

While conventional lasers produce limited fixed wavelengths, OPOs may be desirable because the signal and idler wavelengths, which are determined by the conservation of energy and momentum (via phase matching), can be varied in wide ranges. Thus it is possible to access wavelengths, for example in the near-infrared, mid-infrared, far-infrared or terahertz spectral region, which may be difficult to obtain from a laser. In addition, OPOs allow for wide wavelength tunability, for example, by changing the phase-matching condition. This makes OPOs a useful tool, for example, for laser spectroscopy.

A limitation is that OPOs generally require a pump source with high optical intensity and relatively high spatial coherence. An OPO is usually pumped by a laser, but the direct use of a laser diode is usually not easily possible. Therefore, the system becomes relatively complex, for example consisting of a diode-pumped solid-state laser or laser devices utilizing fiber-amplification, and the actual OPO. However, such pumps producing high quality beams may be expensive, large, and produce considerable heat. For example, OPOs are typically pumped using coherent narrow linewidth lasers, for example, at 1064 nm. Therefore, there is a need in the industry to address one or more of the above mentioned shortcomings.

Bosenberg et al. "Continuous-wave singly resonant optical parametric oscillator based on periodically poled LiNbO3" 1996 / Vol. 21, No. 10 / OPTICS LETTERS, discloses a typical state of the art OPO.

The following documents disclose subject matter of interest in relation to this invention:
US 5296960;
EP1006967;
K-J Boiler et al in document "Diode-pumped optical parametric oscillators", Quantum and Semiclassical optics: Journal of the European Optical Society Part B, Institute of Physics Bristol, vol. 9, No. 2, 1 April 1997, pages 173 - 189, XP020079543, ISSN: 1344-4111, DOI: 10.1088/1355-5111/9/2/006;
Kavita Devi et al: Tunable, continuous-wave, ultra violet source based on intracavity sum-frequency-generation in an optical parametric oscillator using BiB306", Optics Express, vol.21, no. 21, 21 October 2013, page 24829, XP055228504, ISSN: 2161-2072, DOI: 10.1364/OE.21.024829;
Das R et al: "Broadband, high-power, continuous-wave, mid-infrared source using extended phase-matching bandwidth in MgO:PPLN", Optics Letters, Optical Society of America, US, Vol.34, no. 24, 15 December 2009, pages 3836-3838, XP001550647, ISSN: 0146-9592;
Moore G et al: "Using multiple mutually incoherent fiber lasers to pump a coherent signal beam in an optical parametric oscillator", 1999 IEEE Leos annual meeting conference proceedings, Leos '99 12th annual meeting, 8 - 11 November, Renaissance Pare Fifty-Five Hotel, San Francisco, CA, IEEE Service Center, Piscataway, N, vol.2, 8 November 1999, pages 584 - 585, XP010361091, DOI: 10.1109/LEOS.1999/811862, ISBN: 9780-07803-5634-4, and
US2012/195333.

### SUMMARY OF THE INVENTION

Embodiments of the present invention provide a quasi-incoherent broadband pumped, tunable, narrow linewidth light source. Briefly described, the present invention is directed to a light source, having a quasi-incoherent broadband pump source configured to produce a longitudinally and transversally multi-mode pump beam. An Optical Parametric Oscillator (OPO) having an optical cavity includes a first crystal configured to receive light from the pump source and produce a first output light beam having a first frequency and a second output light beam having a second frequency, a second crystal configured to receive the first output light beam and/or the second output light beam and produce a third output light beam, and an optical coupler between the pump source and the OPO. At least one of the first and second output light beam includes substantially single transversal mode light having a narrower linewidth than the pump source, and the third output light beam having a frequency substantially twice the first frequency or the second frequency.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principals of the invention.
FIG. 1 is a general schematic diagram of an OPO.
FIG. 2 is a schematic diagram of an exemplary first embodiment of an OPO pumped by a quasi-incoherent broadband source.
FIG. 3 is a schematic diagram of the first embodiment of FIG. 2 showing more detail of the OPO cavity.
FIG. 4 is a schematic diagram of an exemplary second embodiment of an OPO pumped by a quasi-incoherent broadband source.
FIG. 5 is a schematic diagram of an exemplary third embodiment of an OPO pumped by a quasi-incoherent broadband source.
FIG. 6 is a schematic diagram of an exemplary fourth embodiment of an OPO pumped by a quasi-incoherent broadband source.
FIG. 7 is a flowchart of a first exemplary method for pumping an OPO with a quasi-incoherent broadband source.
FIG. 8 is a flowchart of a second exemplary method for pumping an OPO with a quasi-incoherent broadband source to produce a visible beam.

### DETAILED DESCRIPTION

The following definitions are useful for interpreting terms applied to features of the embodiments disclosed herein, and are meant only to define elements within the disclosure. No limitations on terms used within the claims are intended, or should be derived, thereby. Terms used within the appended claims should only be limited by their customary meaning within the applicable arts.

As used within this disclosure, "narrow linewidth" is determined relative to the context of the beam being discussed. For the pump, narrow linewidth generally refers to a linewidth of less than 10 GHz. With regard to the resonated wave, "narrow linewidth" may be on the order of less than GHz range, or even MHz, much narrower than the pump. Radiation that does not meet these requirements of a "narrow linewidth" is referred to herein as "broadband."

As used within this disclosure, "linewidth-narrowing" refers to the narrowing of the linewidth of a broadband source to values above 10 GHz. Such a "linewidth-narrowed" beam is thus still termed "broadband" following the above definition.

As used within this disclosure, OPO generally refers to a continuous wave OPO (cw-OPO), rather than a pulsed OPO. In general, "continuous wave" or "CW" refers to a laser that produces a continuous output beam, sometimes referred to as "free-running," as opposed to a q-switched, gain-switched or mode locked laser, which has a pulsed output beam.

As used within this disclosure, "beam quality" generally refers a quantitative measure of the quality of a laser beam and according to ISO standard 11146. M² is a dimensionless beam propagation parameter used to quantify and determine the beam propagation characteristics.

As used within this disclosure, "quasi-incoherent" means a transversally multi-mode light source with an M² value much larger than unity. For example an M² squared value of three may be considered as quasi-incoherent, but a preferred quasi-incoherent source would have a M² value of eight or larger. Such a light source may also be referred to as having an M² value much larger than unity.

As used within this disclosure, "substantially single transversal mode light" means a light source having a dominant contribution of a single transversal mode, preferably TEM₀₀, for example with M² less than three. Other types of substantially single transversal mode light may be used, for example, TEM₀₁.

As used within this disclosure, "substantially" means very nearly, or to within manufacturing tolerances acceptable to a person having ordinary skill in the art. For example, substantially single transversal mode light refers to light produced by an OPO as would close to single transversal mode light as may be expected to be produced by an OPO.

As used within this disclosure, "mirror" refers to an optical element having at least one reflective surface. The reflective surface may reflect light received from one direction, but transmit light received from other directions. The reflective surface may reflect some wavelengths and transmit other wavelengths. Further the reflective surface may partially transmit and partially reflect some wavelengths.

Reference will now be made in detail to embodiments of the present invention, examples of which are illustrated in the accompanying drawings. Wherever possible, the same reference numbers are used in the drawings and the description to refer to the same or like parts.

In general, embodiments of the present invention include devices and methods for producing coherent, narrow linewidth cw-laser radiation from an OPO using a quasi-incoherent, broadband laser. The quasi-incoherent broadband pump source may be frequency stabilized.

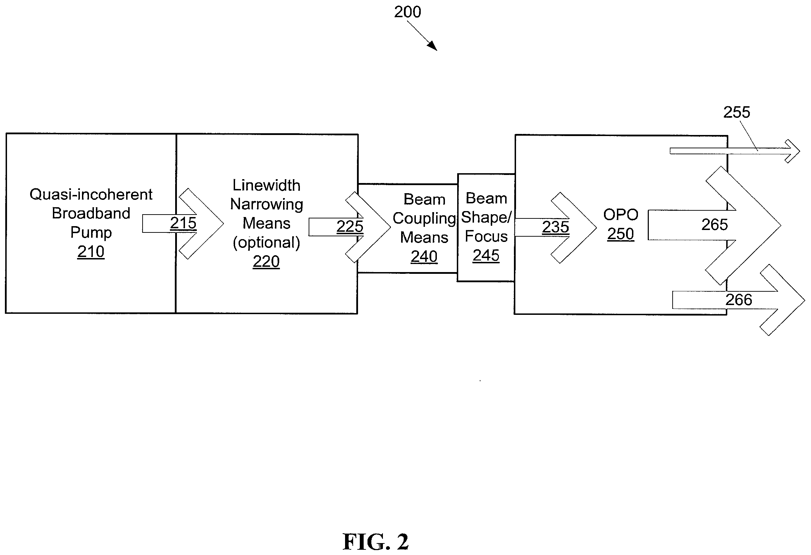

A first example, not forming part of the invention, 200 of an OPO pumped by a quasi-incoherent, broadband pump laser is shown in FIG. 2. A quasi-incoherent, broadband pump laser 210 is coupled with a frequency stabilizing linewidth-narrowing means 220. In alternative embodiments, the coupled broadband pump laser 210 and frequency stabilizing linewidth-narrowing means 220 may be replaced by an integrated source. For example, certain diode laser sources have an integrated frequency-narrowing means or may be spectrally narrow due to their general structure. The linewidth-narrowing means 220 receives a raw pump beam 215 from the pump laser 210, and produces a frequency stabilized linewidth-narrowed pump beam 225. The narrowed pump beam 225 is received by a beam coupler 240, for example, a multi-mode optical fiber, or other suitable wave guide. A beam shaper/focuser 245 receives the narrowed pump beam 225 from the beam coupler 240, and shapes and/or focuses the narrowed pump beam 225 into a shaped pump beam 235, which is received by an OPO 250. The output of the OPO 250 includes a signal beam 265, an idler beam 266, and a residual pump beam 255. The pump laser 210 may be, for example, an 808 nm multi-emitter high-power diode bar, emitting on the order of 40W of light, having a linewidth of approximately 0.3 nm (approximately 100 GHz). In alternative embodiments, the pump laser 210 may produce a beam in the wavelength range of 500 nm to 1200 nm, with an output power range of 10-1000W. Examples of the pump laser 210 may include single-emitter and multi-emitter diode lasers.

Under the first embodiment, the pump laser 210 may be a quasi-incoherent broadband light source, for example, single emitter or a multiple emitter diode laser, producing a longitudinally multi-mode and a transversally multi-mode beam 215 where M² is much larger than unity. One example of a quasi-incoherent broadband light source includes, but is not limited to, a laser diode stack. In contrast to a conventional OPO pump source, such as a diode-pumped solid-state laser or fiber laser, the pump laser 210 may include characteristics that are undesirable in the output of the OPO 250, such as broad linewidth and poor beam quality. Thus the pump beam 215 is generally considered to be an "ugly" (poor quality) beam, and previously considered to be unsuitable for driving an OPO.

The pump laser 210 may be frequency-stabilized using the linewidth-narrowing means 220, for example, a volume Bragg grating (VBG), also known as holographic grating. In some lasers, such a linewidth-narrowing means may be integrated in the laser diode itself, for example in distributed feedback laser diodes. For example, high power diode lasers typically suffer from a broad spectrum, which may reduce the efficiency for pumping applications with small absorption or conversion bandwidths. To overcome this problem the spectral properties of the pump source can (optionally) be improved by the linewidth-narrowing means 220. For example, the effect of using a VBG is a well-defined optical feedback within a very small spectral range which stabilizes the spectrum of the pump laser. The linewidth-narrowing means 220 may transmit a portion of the raw pump beam 215 back into the pump laser 210, thereby locking the wavelength of the pump beams 215, 225, producing a narrow band pump light, for example, having a linewidth on the order of, but not limited to, a 30-100 GHz range.

The output beam 225 of the linewidth-narrowing means 220 may be infrared (IR) light or visible spectrum light, routed into an optical beam coupler 240. The beam coupler 240 provides a means of transferring the light 225 from the pump 210, 220 to the OPO 250. The beam coupler 240 may be, for example, an optical fiber, or other suitable wave guide. Optical fiber may be desirable, for example, in scenarios where it is advantageous for the pump source to be somewhat remote from the OPO 250, or where a straight line configuration between the pump 210 and OPO 250 is inconvenient.

A beam shaper/focuser 245 receives the narrowed pump beam 225 from the beam coupler 240. The beam shaper/focuser 245 may be a single lens, or a combination of one or more optical elements configured to condition the light 225 from the pump 210, 220 before entering the cavity of the OPO 250. The conditioned light 235 may be processed by a simple lens system, for example a first lens in order to collimate the beam from the beam coupler 240, and a second lens to focus the beam into the OPO crystal.

The OPO receives the conditioned pump light 235, and selectively channels desirable qualities of the conditioned pump light 235 into a first output beam 265, while channeling undesirable qualities of the conditioned pump light 235 into a second output beam 266. In this way, high quality light 265 may be produced via the OPO 250 from a relatively low quality pump beam 215. Since OPOs are not one hundred percent efficient, some fractional unconverted portion of the received pump light 235 is emitted from the OPO 250 as a residual pump beam 255. The first output beam 265 may be the signal beam in the range of approximately 0.1 to 50W. The signal beam may have an exemplary wavelength range of 1050-1600 nm for an exemplary pump wavelength around 808nm. The linewidth of the signal beam may be much narrower than the pump 235, for example, on the order of 1 GHz or below. For example, the signal beam can be, or close to, transversally single-mode and with an M² value close to unity. In contrast, an exemplary second output beam 266 may be in the range of approximately 0.1 to 50W, having an exemplary wavelength range of 1800-4000 nm, a linewidth on the order of 100 GHz, where the beam quality M² is much larger than unity.

As noted previously, in general the term "signal radiation" typically denotes the OPO generated wave with the smaller wavelength, while "idler radiation" typically denotes the larger wavelength. However, either the signal or idler radiation may be resonated in the cavity, with the resonated wave having the desired beam quality and linewidth characteristics.

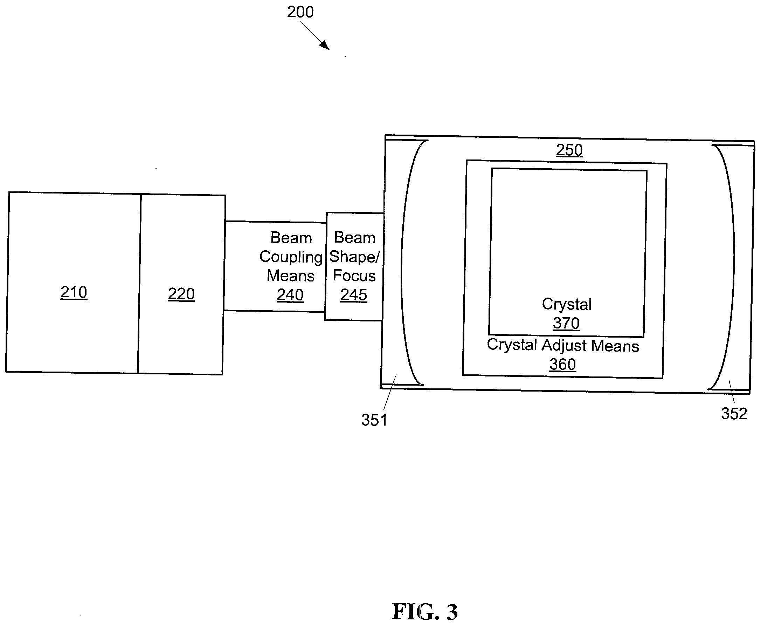

FIG. 3 shows the first embodiment 200 with more detail of the OPO 250. The OPO 250 includes an optical cavity defined by mirrors; in this embodiment a first cavity mirror 351 and a second cavity mirror 352. The cavity mirrors 351, 352 are configured to be highly reflective for the resonant wave/waves, namely, the signal and/or idler.

The received pump light 235 is transmitted through the first cavity mirror 351 and is directed to a non-linear crystal 370 within the cavity. The cavity mirrors 351 may be implemented by directly applying a reflective coating to surfaces of the crystal 370, or by other means familiar to persons having ordinary skill in the art.

For example, the OPO crystal 370 may be Magnesium Doped Lithium Niobate (MgO:LiNbO₃), periodically poled and having a multiple grating or a fan-out structure for wavelength tuning, approximately, but not limited to 25 by 12 by 1 mm³. Other crystals may be formed of doped or un-doped LiNbO₃ without periodic poling or a single grating, and/or KTP with or without periodic poling, among other materials. Other possible materials may include doped or un-doped LiTaO3 with or without periodic poling, RbTiOAsO₄ with or without periodic poling, or BBO. The crystal 370 has a grating having a poling period appropriate to receive a photon from the received pump beam 235 and spontaneously producing a pair of photons inside the cavity. The pair of produced photons respectively have frequencies ωₛ and ωᵢ. Division of energy between the produced photons is configurable by the optical parametric process of the crystal 370. The frequencies (ωₛ, ωᵢ) may be determined according to characteristics of the crystal 370.

With the nonlinear process, efficiency relies on the intensity of light 235 (FIG. 2) entering the crystal 370. The received pump light 235 (FIG. 2) must reach an energy threshold to effectively produce the two output wavelengths. For example, focusing 50W of pump light to diameters of less than 200µm over a crystal length of 25mm may be sufficient to overcome the threshold. At this threshold the gain compensates the losses and the oscillation starts. In general, it is desirable to have a high intensity input. However, excessive input intensity may damage the crystal 370.

The produced photons exit the crystal 370, along with some unconverted pump photons, and proceed toward the second cavity mirror 352. Depending on how the second cavity mirror is configured, certain wavelengths will pass through the second cavity mirror 352, exiting the OPO 250 cavity, while other wavelengths will be reflected back within the cavity toward the crystal 370. Therefore, the reflected wavelengths will resonate within the OPO 250 cavity. Usually some macroscopic power level of the resonated wavelength leaks out of at least one cavity-mirror.

In alternative embodiments, the crystal 370 may have a fixed grating, producing fixed output frequencies for a fixed temperature. The crystal 370 output frequencies may be varied by changing the temperature of the crystal 370. Under the first embodiment, the crystal 370 has a single-, fan-out- or multi-period- grating. For example, for a crystal 370 having fan-out gratings, the crystal grating may be moved in relation to the pump beam 235 (FIG. 2) to tune to the desired signal and/or idler wavelengths. Thereby, the output light 265 (FIG. 2) can be tuned by moving the crystal 370 position and/or angle, and/or changing the temperature of the crystal 370. Configuration of the crystal 370 provides for very broad tuning possibilities, because the two generated waves 265, 266 (FIG. 2) ensure both conservation of energy and conservation of momentum. There are an infinite number of signal and idler wave combinations that may be produced by the pump beam 235 (FIG. 2).

The fan-out or multi-period grating non-linear crystal 370 may be mounted on a crystal adjustment means 360, for example, a translation stage, providing a mechanical moving of the crystal 370. The crystal adjustment means 360 may be, for example, piezo-driven, servo-driven, or manually adjustable, among other adjustment means. An exemplary crystal 370 may be formed of Lithium Niobate having a periodic polling, fan-out design.

Returning to FIG. 2, the OPO 250 receives the pump beam 235 and produces the signal and idler beams 255, 256 having new wavelengths, where one of the signal or idler beams 255, 256 may be a substantially single transversal mode wave, having a very narrow linewidth, for example, much narrower than the pump beam 235. Thus the OPO 250 can produce a single mode beam having a very high beam quality, from a relatively low quality pump 210. In essence, the OPO 250 produces two output beams from the input pump beam, the first output beam 265 with the desirable beam qualities, and the second output beam 266 with the undesirable qualities. For example, desirable beam qualities may include being spectrally narrow, such as having a linewidth of approximately one GHz or less, and good beam quality, such as having M² below three. These qualities may be obtained through resonating the beam in the single-mode OPO cavity. For example, when resonating the signal beam, the nonlinear interaction in the OPO crystal 370 preferably generates additional signal photons with qualities determined by the single-mode cavity. This may lead, for example, to the generation of an output beam 265 with an M² value close to unity when pumping the OPO 250 with a multi-mode pump beam 235, for example, having dominant contributions of higher Hermite-Gaussian modes, for example TEM₁₁, TEM₂₁, TEM₂₂, among others.

Depending upon the application, the first beam 265 may be the signal and the second beam 266 may be the idler, or the first beam 265 may be the idler, and the second beam 266 may be the signal. The high quality beam 265 output by the OPO 250 is suitable for a wide range of uses, for example, bio-imaging applications requiring well defined wavelength, and good beam quality for coupling into an optical fiber.

Previously, coherent narrow linewidth pump lasers for OPOs were relatively expensive, for example, a fiber amplified single mode laser, or diode-pumped fiber lasers. In addition, fiber lasers are typically restricted to output wavelengths above 1000 nm. Under the first embodiment much lower pump wavelengths (808nm, down to approximately 450nm) may be used, which may be more efficient for OPO pumping, as longer wavelengths require more power to efficiently convert light in the OPO 250.

Compared to the more commonly used fiber laser sources, using quasi-incoherent broadband pump sources, for example, diode lasers, allows use of a pump at smaller wavelengths such as 808 nm and at the same time cutting costs of the pump source 210, for example by fifty percent or more. In contrast to common fiber lasers, the pump source 210 may deliver the light to the OPO 250 cavity through a multi-mode fiber, i.e. with a different spatial profile and beam quality. Even so, the emitted light 265 from the OPO 250 may be spatially substantially single-mode due to the OPO 250 cavity design.

Typically, quasi-incoherent broadband pump sources have been used to pump solid state lasers. However, light generation in a laser is quite different from light generation in an OPO, as the fundamental mechanism is different. OPOs generally use a direct conversion of light. In contrast, a laser is restricted to transitions of the laser medium, which will typically limit the accessible tuning range, where an OPO can be tuned over a very broad range.

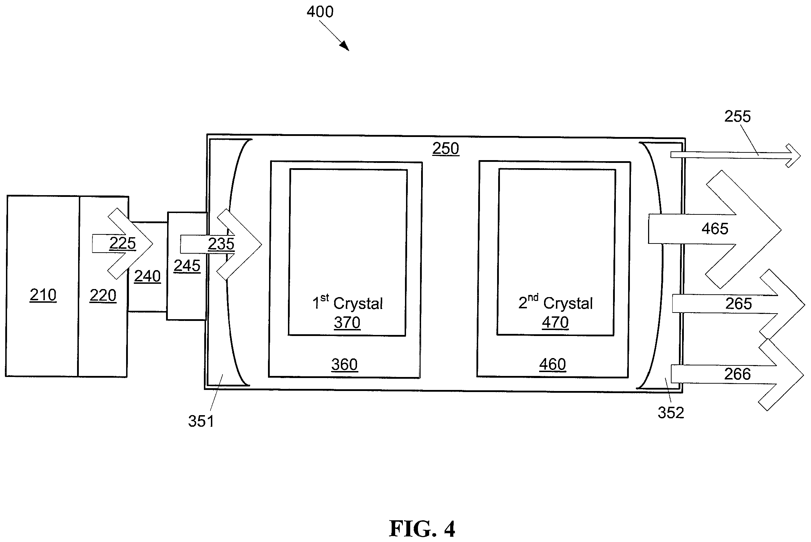

FIG. 4 is a schematic diagram of an exemplary second embodiment 400 of an OPO pumped by a quasi-incoherent broadband source. The second embodiment 400 OPO 250 produces substantially coherent, wavelength tunable, narrow linewidth cw-laser radiation from a quasi-incoherent broadband source (pump) 210, 220.

Elements in FIG. 4 having the same reference numeral as FIGS. 2 and 3 may be substantially similar to the elements described above regarding the first embodiment. A quasi-incoherent, broadband pump laser 210 may optionally be coupled with a frequency stabilizing linewidth-narrowing means 220. A beam coupler 240 receives a narrowed pump beam 225 from the linewidth-narrowing means 220 and conveys it to a beam shaper/focuser 245 and shapes and/or focuses the narrowed pump beam 225 into a shaped pump beam 235, which is coupled into an OPO 250. The output of the OPO 250 includes a signal beam 265, an idler beam 266, and a residual pump beam 255. In alternative embodiments, the linewidth-narrowing means 220 may be omitted, and the beam coupler 240 receives the pump beam directly.

The OPO 250 includes an optical cavity defined by a first cavity mirror 351 and a second cavity mirror 352. The received pump light 235 is transmitted through the first cavity mirror 351 and is directed to a first non-linear crystal 370 within the cavity. The produced signal and idler beams exit the first crystal 370, and proceed toward a second crystal 470. The second crystal 470 may be, for example, a second-harmonic generation (SHG) crystal, selected to double the frequency of a received light beam, such as the signal beam from the first crystal 370. For example, the second crystal 470 may be an MgO:LiNbO₃ SHG crystal, having a periodically poled fan-out structure for wavelength tuning.

The second crystal 470 may be equipped with adjustment means to phase-match the chosen resonant signal or idler wavelength. The second crystal 470 may be mounted on a second crystal adjustment means 460, for example, a translation stage, providing a mechanical moving of the second crystal 470. The second crystal adjustment means 460 may be, for example, piezo-driven, servo-driven, or manually adjustable, or otherwise adjustable.

The second crystal 470 may be selected to double the frequency of either the idler beam or the signal beam. By doubling the frequency of the signal beam or the idler beam, the second crystal 470 may provide a component output beam 465 with a visible or near-infrared wavelength. Other wavelengths for the component output beam 465 are also possible, for example, UV wavelengths. If the second crystal 470 is inserted to double one of the frequencies, it should be phase-matched for SHG at the desired wavelength, for example by having a suitable periodical poling. The produced frequency shifted photons exit the second crystal 470 and proceed toward the second cavity mirror 352.

The two crystals 370, 470 in series in the cavity 250 effectively convert the frequency of the pump light 235, for example pushing it into the visible or near-infrared wavelength range, thereby producing substantially single transversal mode and narrow linewidth visible (VIS) or near-infrared (NIR) light 465 from a quasi-incoherent broadband pump source 210, 220.

Optionally, the SHG signal may have a tunable wavelength, for example in the range of 525-800 nm at approximately 0.5-5W, with a linewidth of approximately 1 GHz or less, and with M² on the order of unity.

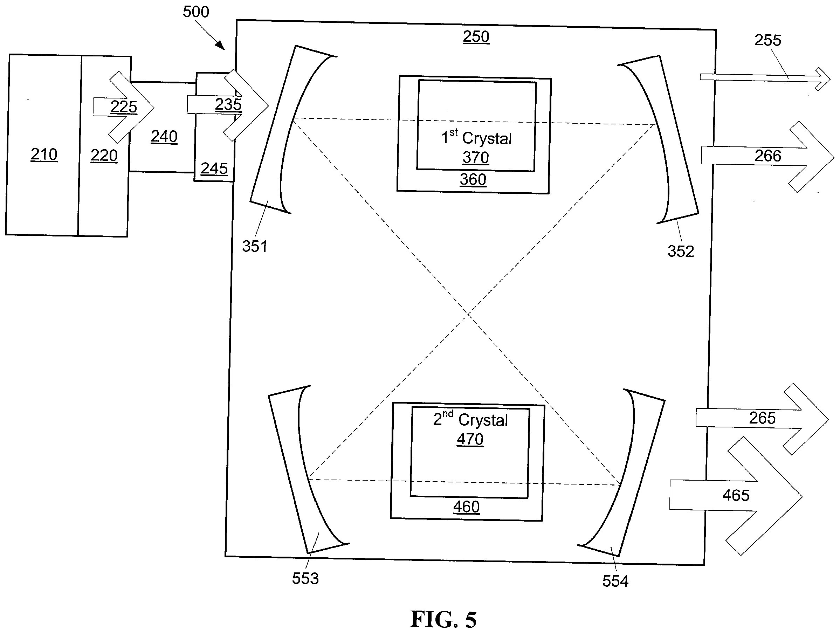

FIG. 5 shows a third embodiment 500 of an OPO. Elements in FIG. 5 having the same reference numeral as FIG. 4 may be substantially similar to the elements described above regarding the second embodiment.

In particular, under the third embodiment, a quasi-incoherent, broadband pump laser 210, may be coupled with a frequency stabilizing linewidth-narrowing means 220, providing a narrowed pump beam 225 to a beam coupler 240, which conveys the narrowed pump beam 225 to a beam shaper/focuser 245 and shapes and/or focuses the narrowed pump beam 225 into a shaped pump beam 235, which is coupled into an OPO 250. As with the second embodiment, the frequency stabilizing linewidth-narrowing means 220 may optionally be omitted.

A first crystal 370 is positioned within the OPO cavity 250 between a first pair of mirrors 351, 352, and a second crystal 470 is positioned within the OPO cavity 250 between a second pair of mirrors 553, 554. A pump light beam 235 is coupled into the OPO cavity 250.

Instead of receiving the signal and idler beams directly from the first crystal 370 as per the second embodiment above, under the third embodiment the second crystal 470 instead receives reflected signal and/or idler beams from the first crystal 370, reflected first by the second mirror 352 and thereafter by the third mirror 553. The light from the second crystal 470 is at least partially reflected by the fourth mirror 554 back to the first mirror 351, while a portion of the light exiting the second crystal 470 exits the OPO chamber 250. Each of the mirrors 351, 352, 553, 554 has at least one reflective surface for at least one of the involved wavelength ranges.

The first crystal 370 is disposed in an optical path between the first mirror 351 and the second mirror 352. The second crystal 470 is disposed in an optical path between the third mirror 553 and the fourth mirror 554. The second mirror 352 is arranged to reflect at least a portion of light received from the first mirror 352 (via the first crystal 370) to the third mirror 553, the third mirror 553 arranged to reflect at least a portion of light from the second mirror 352 to the fourth mirror 554. The fourth mirror 554 is arranged to reflect at least a portion of light from the third mirror (via the second crystal 470) to the first mirror 351. The first mirror 351 is arranged to reflect at least a portion of light from the fourth mirror 554 to the second mirror 352 via the first crystal 370. This arrangement of mirrors 351, 352, 553, 554 allows light within the OPO 250 to resonate within the (ring-) cavity. Light exiting the OPO includes a residual pump beam 255, a signal beam 265, an idler beam 266, and an output beam 465, for example a visible beam, UV beam, or a NIR beam.

The position of the second crystal 470 may be adjusted to match the chosen signal or idler wavelength produced by the first crystal 370. For example, the second crystal 470 may be mounted on a second crystal adjustment means 460. Likewise, the first crystal 370 may be mounted on a first crystal adjustment means 360, as described above.

Compared with the second embodiment, the third embodiment provides an OPO resonator allowing for a resonated wave travelling exclusively in the forward direction. This may be advantageous compared to the second embodiment which includes a resonator for a standing wave. In such a standing wave resonator interference effects between the forward and backward travelling beams can be detrimental for the efficiency of the device. In addition, the third embodiment allows for the creation of multiple foci within the resonator so that both the first crystal 370 and the second crystal 470 may each be placed at focus positions where the optical intensities are highest. The second embodiment may be preferred over the third embodiment for the sake of compactness, simplicity and in order to minimize cost.

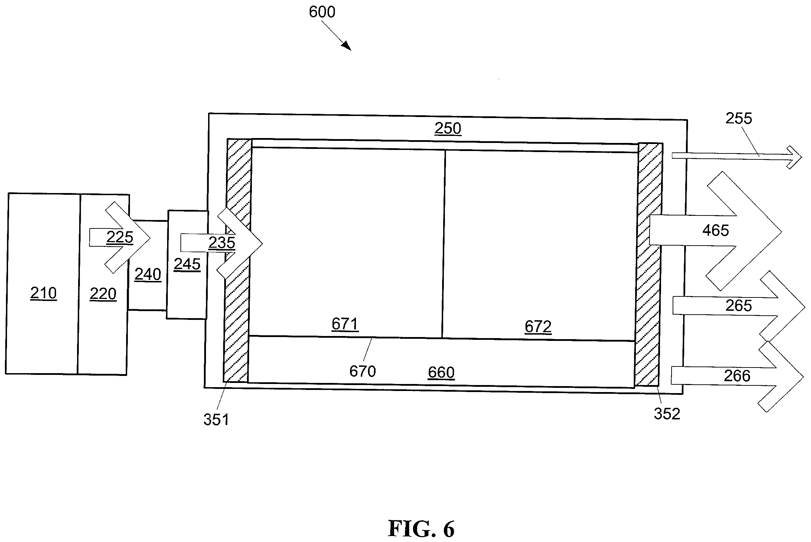

FIG. 6 shows a fourth embodiment of an OPO, where a crystal 670 is positioned between a pair of mirrors 351, 352 within the OPO cavity. The crystal 670 may be a single non-linear crystal that includes a first region 671 and a second region 672. The first region 671 and the second region 672 may have different characteristics, for example, two different poling periods. For example, for a MgO:LiNbO₃ crystal pumped by a pump beam with a wavelength of about 808 nm, the polling period range of the first region may be on the order of 20 µm to 23 µm and the polling period range of the second region 672 may be on the order of 5 µm to 20 µm in order to generate frequency-doubling of the signal radiation. Such a configuration provides for the creation of signal/idler radiation and subsequent frequency-doubling all within a single crystal 670. This cuts costs, increases compactness and simplifies alignment while compromising modularity of the device.

A pump light beam 235 is coupled into the OPO cavity 250 and resonates between the pair of mirrors 351, 352. The crystal 670 may be selected for a variety of purposes, including producing several beams of light with the first region 371, which are then converted or partially converted to other light beams by the second region 372.

A pump light beam 235 is received into the OPO cavity 250 and resonates between the pair of mirrors 351, 352. The cavity mirrors 351, 352 are configured to be highly reflective of desired wavelengths, for example, one or more of the signal wavelength 265 and/or the idler wavelength 266. The cavity mirrors 351, 352 may be so configured by applying a reflective coating directly to surfaces of the crystal 670, or by other means familiar to persons having ordinary skill in the art.

The multi grating non-linear crystal 670 may be mounted on a crystal adjustment means 660, for example, a translation stage, providing a mechanical moving of the crystal 670. The crystal adjustment means 660 may be, for example, piezo-driven, servo-driven, or manually adjustable, among other adjustment means. Other embodiments are also possible. For example, a variation of the third embodiment as shown in FIG. 5 may include multiple crystals 370, 470 between the first pair of mirrors 351, 352, and/or multiple crystals 370, 470 between the second pair of mirrors 553, 554. The OPO 250 may also include other combinations and configurations of mirrors and crystals, for example, an OPO may have 3, 5, 6, or more mirrors arranged to guide specific beams to a particular crystal within the OPO 250 cavity.

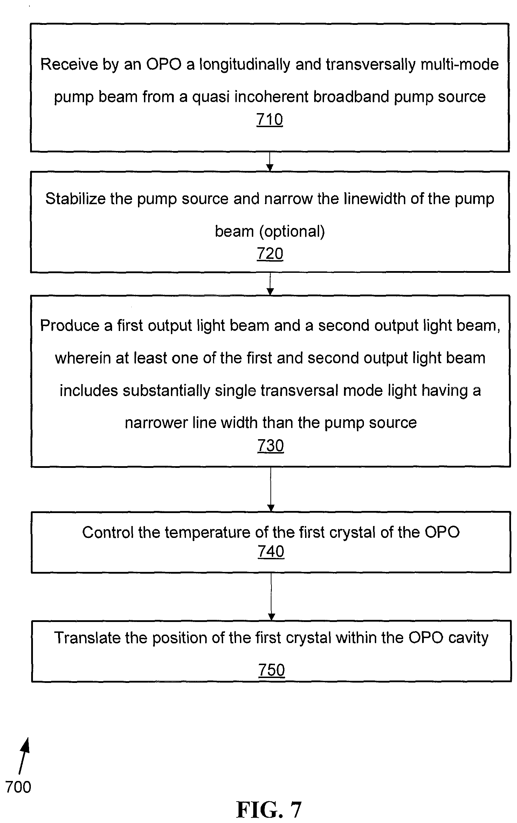

FIG. 7 is a flowchart of a first exemplary method 700 for pumping an OPO 250 with a quasi-incoherent broadband source 210. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

An OPO 250 having a first crystal 370 receives a quasi-incoherent broadband pump beam 215, 225, 235 from a quasi-incoherent broadband pump source 210, as shown by block 710. The pump source 210 may be stabilized and the linewidth of the pump beam may be narrowed, as shown in block 720. For example, the pump source 210 may be coupled with a linewidth narrowing means 220 such as a volume Bragg grating, as described above. In some embodiments, the linewidth stabilization may be omitted. The OPO 250 produces a first output light beam 265 and a second output light beam 266 from the pump beam 215, 225, 235, wherein at least one of the first output light beam 265 and second output light beam 266 consists of substantially single transversal mode light having a narrower linewidth than the pump beam 235, as shown by block 730.

The temperature of the first crystal 370 may be controlled, as shown by block 740, for example, to tune the wavelength of the first output light beam 265 and/or the second output light beam 266. The temperature of the first crystal 370 may be controlled, for example, by coupling the first crystal 370 to a Peltier element or resistive heater (not shown) and an attached PID controller (not shown). The position of the first crystal 370 may be translated within the cavity of the OPO 250 as shown by block 750, for example, using a piezo controller or a servo controller.

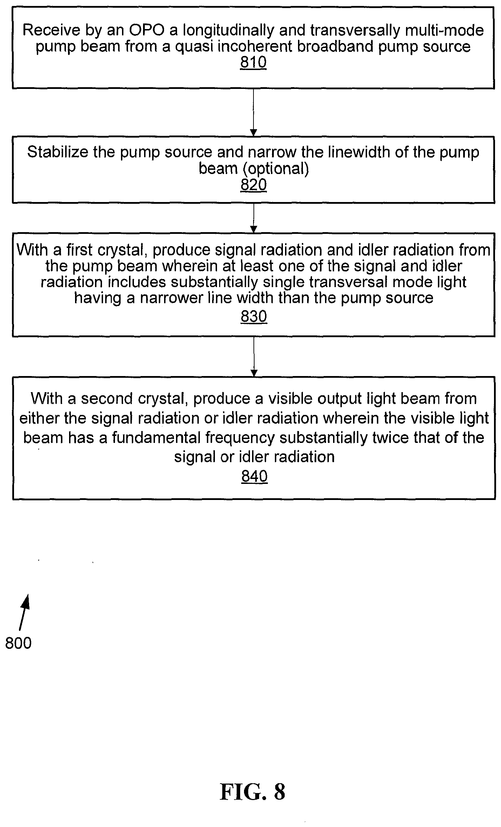

FIG. 8 is a flowchart of a second exemplary method 800 for pumping an OPO 250 with a quasi-incoherent broadband source 210 to produce a visible beam 465. The OPO 250 includes a first crystal 370 and a second crystal 470, and receives a quasi-incoherent broadband pump beam 215, 225, 235 from a quasi-incoherent broadband pump source 210, as shown by block 810. The pump source 210 is stabilized and the linewidth of the pump beam is narrowed, as shown in block 820. For example, the pump source 210 may be coupled with a linewidth narrowing means 220 such as a volume Bragg grating, as described above. In some embodiments, the linewidth stabilization may be omitted. The first crystal 370 produces signal radiation 265 and idler radiation 266 from the pump beam 235, wherein at least one of the signal and idler radiation 265, 266 includes single transversal mode light having a narrower line width than the pump source 235, as shown by block 830.

The second crystal produces the output light beam 465 from either the signal radiation 265 or idler radiation 266, as shown by block 840. The output light beam 465 has a fundamental frequency substantially twice that of the signal radiation 265 or idler radiation 266, and may be, for example, visible light, UV light, or NIR light.

Other embodiments are also possible. For example, an alternative embodiment structurally similar to the second embodiment may substitute a sum frequency generation SFG crystal for an SHG crystal. As persons having ordinary skill in the art would appreciate, the alternative embodiment replacing the SHG crystal with an SFG crystal, for example designed for SFG of the pump and the resonated waves, will not produce a narrow linewidth, but a potentially single-transversal-mode, output. Other choices for a second crystal are also possible.

While the above description uses the relative term "linewidth narrowing" at various stages of the embodiments, it should be noted the light actually entering the OPO cavity is still considered "broadband" following the above definition (>10 GHz). For example, the optional "linewidth narrowing means" may only reduce the linewidth of the raw pump source to typical values on the order of 30-100 GHz. The very narrow output (<1 GHz) is then generated via the OPO process itself.

## Claims

1. A light source (200), comprising:
a pump source (210) configured to produce a longitudinally and transversally multi-mode pump beam (225) having a linewidth greater than 10 GHz and an M² value of 3 or greater;
an Optical Parametric Oscillator (OPO) (250) further comprising:
an optical cavity defined by a plurality of mirrors (351, 352), the optical cavity further comprising:
a first crystal (370) configured to receive light from the pump source and produce a first output light beam (265) comprising a first frequency and a second output light beam (266) comprising a second frequency; and
a second crystal (470) configured to receive the first output light beam and/or the second output light beam and produce a third output light beam; and
a wave guide (240) disposed between the pump source and the
OPO configured to convey the pump beam from the pump source to the OPO,
wherein at least one of the first and second output light beam comprises substantially single transversal mode light having a narrower linewidth than the pump source, and the third output light beam having a frequency substantially twice the first frequency or the second frequency.

2. The light source of claim 1, further comprising a holographic grating (220) configured to narrow the linewidth of the pump beam disposed between the pump source and the wave guide.

3. The light source of claim 2, wherein the holographic grating a volume Bragg grating.

4. The light source of claim 2 or 3, wherein the pump source further comprises the holographic grating.

5. The light source of claim 1, wherein the second crystal is selected from the group consisting of a second-harmonic generation (SHG) crystal and a sum frequency generation (SFG) crystal.

6. The light source of claim 1, wherein the optical cavity further comprises a first mirror (351) and a second mirror (352) disposed substantially opposite the first mirror and arranged to reflect a portion of light received from the first mirror back to the first mirror, wherein the first crystal and the second crystal are disposed in an optical path between the first mirror and the second mirror.

7. The light source of claim 6, wherein the first mirror comprises a reflective coating on a surface of the first crystal, and/or the second mirror comprises a reflective coating on a surface of the second crystal.

8. The light source of claim 1, wherein the optical cavity further comprises:
a first mirror (351) comprising a first reflective surface;
a second mirror (353) comprising a second reflective surface disposed substantially opposite the first mirror;
a third mirror (553) comprising a third reflective surface; and
a fourth mirror (554) comprising a fourth reflective surface disposed substantially opposite the third mirror,
wherein the first crystal is disposed in an optical path between the first reflective surface and the second reflective surface, and the second crystal is disposed in an optical path between the third reflective surface and the fourth reflective surface,
the second reflective surface arranged to reflect at least a portion of light received from the first reflective surface to the third reflective surface, the third reflective surface arranged to reflect at least a portion of light from the second reflective surface to the fourth reflective surface, the fourth reflective surface arranged to reflect at least a portion of light from the third reflective surface to the first reflective surface, the first reflective surface arranged to reflect at least a portion of light from the fourth reflective surface to the second reflective surface.

9. The light source of claim 8, wherein at least one mirror comprises a reflective coating on at least one surface of at least one of the first and/or second crystal.

10. The light source of claim 1, further comprising means for tuning the third output light beam.

11. The light source of claim 10, wherein the tuning means further comprises at least one of the group consisting of means to control the temperature of the second crystal, means to translate the position of the second crystal within the cavity, and means to rotate the second crystal within the cavity.

12. The light source of claim 10, wherein the second crystal is selected from a group consisting of a crystal that is cut for birefringent phase matching, a multi period grating crystal, a fan-out grating crystal, and a single grating crystal.

13. A method for producing from a longitudinally and transversally multi-mode pump beam (225) substantially single transversal mode light having a narrower linewidth than the pump beam by using an Optical Parametric Oscillator (OPO) (250) comprising an optical cavity containing a first crystal (370) and a second crystal (470) of any of the claims 1 to 12, comprising the steps of:
receiving by the OPO via a wave guide a pump beam (225) having a linewidth greater than 10 GHz and an M² value of 3 or greater from a pump source (210);
producing from the pump beam, by the first crystal, a first light beam and a second light beam, wherein at least one of the first and second light beam comprises substantially single transversal mode light having a narrower linewidth than the pump source; and
producing from the first or the second light beam, by the second crystal, the third output light beam,
wherein the third light beam has a fundamental frequency substantially twice that of the first light beam or the second light beam.

## Patentansprüche

1. Lichtquelle (200), umfassend:
eine Pumpquelle (210), die konfiguriert ist, um einen longitudinalen und transversalen Multi-Mode-Pumpstrahl (225) zu produzieren, der eine Linienbreite von mehr als 10 GHz und einen M²-Wert von 3 oder mehr aufweist;
einen optischen parametrischen Oszillator (OPO) (250), ferner umfassend:
einen optischen Hohlraum, der durch eine Vielzahl von Spiegeln (351, 352) definiert ist, wobei der optische Hohlraum ferner Folgendes umfasst:
einen ersten Kristall (370), der konfiguriert ist, um Licht von der Pumpquelle zu empfangen und einen ersten Ausgangslichtstrahl (265), der eine erste Frequenz umfasst, und einen zweiten Ausgangslichtstrahl (266), der eine zweite Frequenz umfasst, zu produzieren; und
einen zweiten Kristall (470), der konfiguriert ist, um den ersten Ausgangslichtstrahl und/oder den zweiten Ausgangslichtstrahl zu empfangen und einen dritten Ausgangslichtstrahl zu produzieren; und
einen Wellenleiter (240), der zwischen der Pumpquelle und dem OPO vorgesehen und konfiguriert ist, um den Pumpstrahl von der Pumpquelle zu dem OPO zu leiten,
wobei zumindest einer von dem ersten und dem zweiten Ausgangslichtstrahl im Wesentlichen transversales Single-Mode-Licht umfasst, das eine schmalere Linienbreite als die Pumpquelle aufweist, und der dritte Ausgangslichtstrahl eine Frequenz aufweist, die im Wesentlichen das Zweifache der ersten Frequenz oder der zweiten Frequenz ist.

2. Lichtquelle nach Anspruch 1, ferner umfassend ein holografisches Gitter (220), das konfiguriert ist, um die Linienbreite des Pumpstrahls, der zwischen der Pumpquelle und dem Wellenleiter vorgesehen ist, zu schmälern.

3. Lichtquelle nach Anspruch 2, wobei das holografische Gitter ein Volumen-Bragg-Gitter.

4. Lichtquelle nach Anspruch 2 oder 3, wobei die Pumpquelle ferner das holografische Gitter umfasst.

5. Lichtquelle nach Anspruch 1, wobei der zweite Kristall ausgewählt ist aus der Gruppe bestehend aus einem Kristall zur Erzeugung einer zweiten Harmonischen (SHG) und einem Kristall zur Erzeugung einer Summenfrequenz (SFG).

6. Lichtquelle nach Anspruch 1, wobei der optische Hohlraum ferner einen ersten Spiegel (351) und einen zweiten Spiegel (352) umfasst, der im Wesentlichen gegenüber dem ersten Spiegel vorgesehen und angeordnet ist, um einen Teil von Licht, das von dem ersten Spiegel empfangen wird, zurück zu dem ersten Spiegel zu reflektieren, wobei der erste Kristall und der zweite Kristall in einem optischen Weg zwischen dem ersten Spiegel und dem zweiten Spiegel vorgesehen sind.

7. Lichtquelle nach Anspruch 6, wobei der erste Spiegel eine reflektierende Beschichtung auf einer Oberfläche des ersten Kristalls umfasst und/oder der zweite Spiegel eine reflektierende Beschichtung auf einer Oberfläche des zweiten Kristalls umfasst.

8. Lichtquelle nach Anspruch 1, wobei der optische Hohlraum ferner Folgendes umfasst:
einen ersten Spiegel (351), der eine erste reflektierende Oberfläche umfasst;
einen zweiten Spiegel (353), der eine zweite reflektierende Oberfläche umfasst, der im Wesentlichen gegenüber dem ersten Spiegel vorgesehen ist;
einen dritten Spiegel (553), der eine dritte reflektierende Oberfläche umfasst; und
einen vierten Spiegel (554), der eine vierte reflektierende Oberfläche umfasst, der im Wesentlichen gegenüber dem dritten Spiegel vorgesehen ist,
wobei der erste Kristall in einem optischen Weg zwischen der ersten reflektierenden Oberfläche und der zweiten reflektierenden Oberfläche vorgesehen ist und der zweite Kristall in einem optischen Weg zwischen der dritten reflektierenden Oberfläche und der vierten reflektierenden Oberfläche vorgesehen ist,
wobei die zweite reflektierende Oberfläche angeordnet ist, um zumindest einen Teil von Licht, das von der ersten reflektierenden Oberfläche empfangen wird, zu der dritten reflektierenden Oberfläche zu reflektieren, wobei die dritte reflektierende Oberfläche angeordnet ist, um zumindest einen Teil von Licht von der zweiten reflektierenden Oberfläche zu der vierten reflektierenden Oberfläche zu reflektieren, wobei die vierte reflektierende Oberfläche angeordnet ist, um zumindest einen Teil von Licht von der dritten reflektierenden Oberfläche zu der ersten reflektierenden Oberfläche zu reflektieren, wobei die erste reflektierende Oberfläche angeordnet ist, um zumindest einen Teil von Licht von der vierten reflektierenden Oberfläche zu der zweiten reflektierenden Oberfläche zu reflektieren.

9. Lichtquelle nach Anspruch 8, wobei zumindest ein Spiegel eine reflektierende Beschichtung auf zumindest einer Oberfläche von zumindest einem von dem ersten und/oder dem zweiten Kristall umfasst.

10. Lichtquelle nach Anspruch 1, ferner umfassend Mittel zum Einstellen des dritten Ausgangslichtstrahls.

11. Lichtquelle nach Anspruch 10, wobei das Einstellmittel ferner zumindest eines aus der Gruppe bestehend aus Mitteln zum Steuern der Temperatur des zweiten Kristalls, Mitteln zum Verschieben der Position des zweiten Kristalls innerhalb des Hohlraums und Mitteln zum Drehen des zweiten Kristalls innerhalb des Hohlraums umfasst.

12. Lichtquelle nach Anspruch 10, wobei der zweite Kristall ausgewählt ist aus einer Gruppe bestehend aus einem Kristall, der für doppelbrechende Phasenanpassung geschnitten ist, einem Mehrperiodengitterkristall, einem Auffächerungsgitterkristall und einem Einzelgitterkristall.

13. Verfahren zum Produzieren von im Wesentlichen transversalem Single-Mode-Licht, das eine schmalere Linienbreite als der Pumpstrahl aufweist, aus einem longitudinalen und transversalen Multi-Mode-Pumpstrahl (225), indem ein optischer parametrischer Oszillator (OPO) (250) verwendet wird, der einen optischen Hohlraum umfasst, der einen ersten Kristall (370) und einen zweiten Kristall (470) enthält, nach einem der Ansprüche 1 bis 12, umfassend die folgenden Schritte:
Empfangen, durch den OPO über einen Wellenleiter, eines Pumpstrahls (225), der eine Linienbreite von mehr als 10 GHz und einen M²-Wert von 3 oder mehr aufweist, von einer Pumpquelle (210);
Produzieren eines ersten Lichtstrahls und eines zweiten Lichtstrahls aus dem Pumpstrahl durch den ersten Kristall, wobei zumindest einer von dem ersten und dem zweiten Lichtstrahl im Wesentlichen transversales Single-Mode-Licht umfasst, das eine schmalere Linienbreite als die Pumpquelle aufweist; und
Produzieren des dritten Ausgangslichtstrahls aus dem ersten oder dem zweiten Lichtstrahl durch den zweiten Kristall,
wobei der dritte Lichtstrahl eine Grundfrequenz aufweist, die im Wesentlichen das Zweifache von derjenigen des ersten Lichtstrahls oder des zweiten Lichtstrahls ist.

## Revendications

1. Source lumineuse (200), comprenant :
une source de pompage (210) configurée pour produire un faisceau de pompage multimode longitudinal et transversal (225) ayant une largeur de raie supérieure à 10 GHz et une valeur M² de 3 ou plus ;
un Oscillateur Paramétrique Optique (OPO) (250) comprenant en outre :
une cavité optique définie par une pluralité de miroirs (351, 352), la cavité optique comprenant en outre :
un premier cristal (370) configuré pour recevoir la lumière de la source de pompage et produire un premier faisceau lumineux de sortie (265) comprenant une première fréquence et un deuxième faisceau lumineux de sortie (266) comprenant une deuxième fréquence ; et
un deuxième cristal (470) configuré pour recevoir le premier faisceau lumineux de sortie et/ou le deuxième faisceau lumineux de sortie et produire un troisième faisceau lumineux de sortie ; et
un guide d'ondes (240) disposé entre la source de pompage et l'OPO configuré pour transporter le faisceau de pompage de la source de pompage à l'OPO,
dans lequel au moins l'un des premier et deuxième faisceaux lumineux de sortie comprend une lumière de mode transversal sensiblement unique ayant une largeur de raie plus étroite que la source de pompage, et le troisième faisceau lumineux de sortie ayant une fréquence étant sensiblement le double de la première fréquence ou de la deuxième fréquence.

2. Source lumineuse selon la revendication 1, comprenant en outre un réseau holographique (220) configuré pour rétrécir la largeur de raie du faisceau de pompage disposé entre la source de pompage et le guide d'ondes.

3. Source lumineuse selon la revendication 2, dans laquelle le réseau holographique est un réseau de Bragg en volume.

4. Source lumineuse selon la revendication 2 ou 3, dans laquelle la source de pompage comprend en outre le réseau holographique.

5. Source lumineuse selon la revendication 1, dans laquelle le deuxième cristal est choisi dans le groupe constitué d'un cristal de génération de deuxième harmonique (SHG) et d'un cristal de génération de fréquence de somme (SFG).

6. Source lumineuse selon la revendication 1, dans laquelle la cavité optique comprend en outre un premier miroir (351) et un deuxième miroir (352) disposé sensiblement face au premier miroir et agencé pour réfléchir une partie de la lumière reçue du premier miroir vers le premier miroir, dans laquelle le premier cristal et le deuxième cristal sont disposés sur un chemin optique entre le premier miroir et le deuxième miroir.

7. Source lumineuse selon la revendication 6, dans laquelle le premier miroir comprend un revêtement réfléchissant sur une surface du premier cristal, et/ou le deuxième miroir comprend un revêtement réfléchissant sur une surface du deuxième cristal.

8. Source lumineuse selon la revendication 1, dans laquelle la cavité optique comprend en outre :
un premier miroir (351) comprenant une première surface réfléchissante ;
un deuxième miroir (353) comprenant une deuxième surface réfléchissante, disposé sensiblement face au premier miroir ;
un troisième miroir (553) comprenant une troisième surface réfléchissante ; et
un quatrième miroir (554) comprenant une quatrième surface réfléchissante, disposé sensiblement face au troisième miroir,
dans lequel le premier cristal est disposé sur un chemin optique entre la première surface réfléchissante et la deuxième surface réfléchissante, et le deuxième cristal est disposé sur un chemin optique entre la troisième surface réfléchissante et la quatrième surface réfléchissante,
la deuxième surface réfléchissante agencée pour réfléchir au moins une partie de la lumière reçue de la première surface réfléchissante vers la troisième surface réfléchissante, la troisième surface réfléchissante agencée pour réfléchir au moins une partie de la lumière de la deuxième surface réfléchissante vers la quatrième surface réfléchissante, la quatrième surface réfléchissante agencée pour réfléchir au moins une partie de la lumière de la troisième surface réfléchissante vers la première surface réfléchissante, la première surface réfléchissante agencée pour réfléchir au moins une partie de la lumière de la quatrième surface réfléchissante vers la deuxième surface réfléchissante.

9. Source lumineuse selon la revendication 8, dans laquelle au moins un miroir comprend un revêtement réfléchissant sur au moins une surface d'au moins l'un du premier et/ou du deuxième cristal.

10. Source lumineuse selon la revendication 1, comprenant en outre des moyens d'accordement du troisième faisceau lumineux de sortie.

11. Source lumineuse selon la revendication 10, dans laquelle les moyens d'accordement comprennent en outre au moins l'un du groupe constitué de moyens pour commander la température du deuxième cristal, de moyens pour translater la position du deuxième cristal à l'intérieur de la cavité, et de moyens pour faire tourner le deuxième cristal dans la cavité.

12. Source lumineuse selon la revendication 10, dans laquelle le deuxième cristal est choisi dans un groupe constitué d'un cristal qui est taillé pour un accord de phase biréfringent, un cristal à réseau multipériode, un cristal à réseau pyramidal de sortance et un cristal à réseau unique.

13. Procédé de production à partir d'un faisceau de pompage multimode longitudinal et transversal (225) d'une lumière de mode transversal sensiblement unique ayant une largeur de raie plus étroite que le faisceau de pompage en utilisant un oscillateur paramétrique optique (OPO) (250) comprenant une cavité optique contenant un premier cristal (370) et un deuxième cristal (470) selon l'une quelconque des revendications 1 à 12, comprenant les étapes de :
réception par l'OPO via un guide d'ondes d'un faisceau de pompage (225) ayant une largeur de raie supérieure à 10 GHz et une valeur M² de 3 ou plus à partir d'une source de pompage (210) ;
production à partir du faisceau de pompage, par le premier cristal, d'un premier faisceau lumineux et d'un deuxième faisceau lumineux, dans lequel au moins l'un des premier et deuxième faisceaux lumineux comprend une lumière de mode transversal sensiblement unique ayant une largeur de raie plus étroite que la source de pompage ; et
production à partir du premier ou du deuxième faisceau lumineux, par le deuxième cristal, du troisième faisceau lumineux de sortie,
dans lequel le troisième faisceau lumineux a une fréquence fondamentale étant sensiblement le double de celle du premier faisceau lumineux ou du deuxième faisceau lumineux.
